# EUROPÄISCHE PATENTSCHRIFT

(11) **EP 0 433 748 B1**
(45) Veröffentlichungstag und Bekanntmachung des Hinweises auf die Patenterteilung: **01.12.1993**
(21) Anmeldenummer: 90123169.6
(22) Anmeldetag: 04.12.1990
(51) Int. Cl.: C01G 37/033, C22B 34/32

(54) **Verfahren zur Herstellung von Chromsäure**
Process for the preparation of chromic acid
Procédé de préparation d'acide chromique

(30) Priorität: 16.12.1989 DE 3941570
(43) Veröffentlichungstag der Anmeldung: 26.06.1991
(73) Patentinhaber: BAYER AG, 51368 Leverkusen (DE)
(72) Erfinder: Lönhoff, Norbert, Dr., W-5090 Leverkusen 1 (DE); Schmidt, Ludwig, Dr., W-4150 Krefeld (DE); Block, Hans-Dieter, Dr., W-5090 Leverkusen 3 (DE); Weber, Rainer, Dr., W-5090 Leverkusen 1 (DE)

(56) Entgegenhaltungen:
- DE-C- 371 222
- FR-A- 2 219 806
- GB-A- 2 081 696
- JP-A-62 047 436

## Beschreibung

Die Erfindung betrifft ein Verfahren zur elektrolytischen Herstellung von Chromsäure.

Gemäß "Ullmann's Encyclopedia of Industrial Chemistry, Fifth Edition, Vol. A 7, VCH Verlagsgesellschaft mbH, Weinheim, 1986, S. 67-81" erfolgt die technische Herstellung von Chromsäure nach drei unterschiedlichen Verfahren. Bei allen Verfahren ist das Ausgangsprodukt Natriumdichromat. Bei der Herstellung von Natriumdichromat wird Chromerz mit Soda und/oder Natriumhydroxid und Luftsauerstoff aufgeschlossen. Der den Aufschlußofen verlassende Klinker wird mit Wasser und/oder chromhaltiger Lösung gelaugt. Nach Einstellung des pH-Wertes der Maische auf 7 bis 9,5 mit Schwefelsäure und/oder Natriumdichromatlösung wird die entstandene Natriummonochromatlösung durch Filtration von unlöslichen Chromerzbestandteilen befreit. Der dabei anfallende chromhaltige Rückstand muß ein er aufwendigen Rückstandsbehandlung zugeführt werden.

Zur Herstellung von Natriumdichromat werden die Chromationen der Lösung durch Ansäuerung mit Schwefelsäure und/oder durch Ansäuerung mit Kohlendioxid unter Druck in Dichromationen umgewandelt. Dabei entsteht als Zwangsanfallprodukt chromhaltiges Natriumsulfat, das einer Aufarbeitung zugeführt werden muß.

Zur Herstellung von Chromsäure nach dem sogenannten Naßverfahren wird die Natriumdichromatlösung aufkonzentriert und mit Schwefelsäure versetzt, wobei Chromsäure auskristallisiert.

Beim sogenannten Schmelzverfahren werden Natriumdichromat-Kristalle mit konzentrierter Schwefelsäure im Molverhältnis von annähernd 1:2 bei Temperaturen von ca. 200 °C umgesetzt. Beiden Verfahren gemeinsam ist der Zwangsanfall an mit Chromat verunreinigtem Natriumbisulfat als Schmelze bzw. als wäßrige Lösung.

Diesen Nachteil vermeidet das dritte Verfahren, die Elektrolyse von Natriumdichromat in wäßriger Lösung, wie es beispielsweise in der DE-C-3 020 260 oder der CA-A-739 447 beschrieben ist.

GB-A-2 081 696 beschreibt die Gewinnung von eisenfreiem CrOOH durch Auflösen von Ferrochrom in Schwefelsäure, Reduktion der Lösung und Fällung von CrOOH bei Temperaturen von 110 - 300 °C und einem pH-Wert von 1,5 bis 2,5 sowie Aufbereitung des das Eisen enthaltenden Filtrats durch Oxidation.

Es wurde nun ein Verfahren zur Herstellung von Chromsäure durch Electrolyse saurer Chromhydroxid-Lösungen gefunden, das die Nachteile der genannten Verfahren nicht aufweist.

Gegenstand der Erfindung ist ein Verfahren zur Erzeugung von Chromsäure durch
a) Lösen von Ferrochrom in Schwefelsäure gegebenenfalls unter Zusatz von Katholyt- und/oder Anolyt-Überlauf aus der Elektrolyse
b) Entfernung von ungelösten Bestandteilen durch Filtration
c) Zugabe von Reduktionsmittel in einer Menge, die dem Gehalt an Eisen(III) und Chrom(IV) in der erhaltenen Lösung mehr als äquivalent ist
d) Fällung von Chrom(III)hydroxid unter Aufrechterhaltung der reduzierenden Bedingungen in der Lösung durch Anheben des pH-Wertes auf ca. 4 - 6 mittels Zugabe von Base
e) Abtrennung des ausgefällten Chromhydroxids unter Aufrechterhaltung der reduzierenden Bedingungen
f) Aufbereitung der das Eisen enthaltenden wäßrigen Lösung durch Oxidation; Ausfällung von Eisen(III) als Eisen(III)hydroxid oder Eisen(III)oxid-Verbindung,

das dadurch gekennzeichnet ist, daß
g) das in Stufe e) abgetrennte Chromhydroxid in Chromsäure und gegebenenfalls Schwefelsäure aufgelöst wird, dergestalt, daß entweder eine einheitliche Lösung in Chromsäure oder aber zwei Lösungen, davon eine in Chromsäure und eine weitere in Schwefelsäure erzeugt wird
h) aus der Lösung ungelöste Anteile abgetrennt werden,
i) die Lösung von Chromhydroxid in Chromsäure als Anolyt zur elektrolytischen Erzeugung von Chromsäure in mit Membranen geteilten Elektrolysezellen eingesetzt wird
   und entweder dieselbe Lösung oder die Lösung von Chromhydroxid in Schwefelsäure als Katholyt in den genannten, mit Membranen geteilten Elektrolysezellen eingesetzt wird, wobei an der Kathode Wasserstoff und/oder Chrommetall elektrolytisch abgeschieden und/oder Chrom(II)-Ionen elektrolytisch erzeugt werden.

Geeignete Bedingungen für die kathodische Abscheidung von elementarem Chrom sind beispielsweise in "J.B. Rosenbaum, R.R. Lloyd, C.C. Merrill: Electrowinning Chromium Metal, US. Bur. of Mines Report of Investigation 5322, US Dep. of the Interior, 1957" beschrieben. Dazu ist eine Erhöhung des pH-Wertes, z.B. durch Zugabe von Ammoniak, nötig. Bei niedrigeren pH-Werten erfolgt kathodisch vorzugsweise eine Reduktion zu Chrom(II)-Ionen.

Vorzugsweise wird ein kohlenstoffhaltiges Ferrochrom, also high carbon Ferrocrom oder charge grade Ferrochrom, als Ausgangsmaterial herangezogen; solche mit einem hohen Chrom:Eisen-Verhältnis sind besonders günstig.

Es ist besonders wichtig, vor der Fällung von Chrom(III)hydroxid ein reduzierendes Medium zu schaffen, um ein möglichst reines Chrom(III)hydroxid zu erhalten. Dabei müssen insbesondere eventuell enthaltene Eisen(III)- und Chrom(VI)-Anteile quantitativ reduziert werden. Besonders geeignete Reduktionsmittel sind Schwefeldioxid, Schweflige Säure sowie deren Salze, metallisches Eisen; metallisches Chrom, beide auch in Legierungen, Chrom(II)-Salze, Hydrazin, Hydroxylamin, Wasserstoff sowie auch elektrischer Strom z.B. an Kohlepartikel-Schüttkathoden. Um Rückoxidationen durch Sauerstoff zu vermeiden, wird der Zutritt von Luft vorteilhafterweise ausgeschlossen, z.B. durch Arbeiten in weitgehend abgeschlossenen Apparaturen und/oder Überlagerung der zu handhabenden Lösungen mit inerten oder reduzierenden Gasen, z.B. Stickstoff, Wasserstoff, Schwefeldioxid, Kohlendioxid, oder dem bei der Ferrochrom-Auflösung entstehenden Gas oder deren Gemischen.

Die Fällung des Chrom(III)hydroxids wird durch Anheben des pH-Wertes auf ca. 4-6 vermittels Zugabe von Basen bewirkt. Geeignete Basen sind Ammoniak, Alkalimetallhydroxide, Alkalimetallsalze schwacher oder mittelstarker Säuren, oder Erdalkalimetalloxide, -hydroxide und -carbonate. Bevorzugt sind Ammoniak, Natriumhydroxid, Natriumcarbonat und ihre wäßrigen Lösungen. Vorzugsweise wird die Fällung des Chrom(III)hydroxids bei erhöhter Temperatur vorgenommen. Seine Abtrennung erfolgt durch Filtrieren oder Zentrifugieren, dabei ist eine weitgehende Entfernung der anhaftenden Mutterlauge anzustreben. Noch weiter läßt sich der Gehalt an Verunreinigungen im Chrom(III)hydroxid durch Waschen mit Wasser oder wäßrigen Lösungen herabsetzen, z.B. durch Waschen mit verdünnter Natrium(bi)sulfit- oder Ammoniumbisulfit-Lösung oder z.B. durch Waschen in einer Schwefeldioxid enthaltenden Atmosphäre. Gewünschtenfalls kann das Chromhydroxid zur weiteren Reinigung nochmals umgefällt werden, in dem es in Säure, z.B. Schwefelsäure erneut gelöst und in reduzierendem Medium erneut durch Anheben des pH-Wertes gefällt wird. Für noch höhere Reinheit kann aus der sauren Lösung das Eisen nach bekannten Verfahren z.B. mit Phosphaten oder Phosphonaten extrahiert werden.

Auf diese Weise erhältliches Chromhydroxid ist auch zur Herstellung von Chrom(III)-Salzen, wie Chrom(III)-acetate, -nitrat, -sulfat und -formiat sowie zur Herstellung von Chromgerbstoffen geeignet.

Die nach Abtrennung des Chrom(III)hydroxids verbleibende Lösung einschließlich der Waschlösungen enthält praktisch das gesamte Eisen und fast das gesamte Sulfat sowie die zugesetzte Base als Sulfat, z.B. Ammoniumsulfat oder Natriumsulfat. Aus dieser Lösung wird das Eisen als Eisen(III)hydroxid, bei erhöhter Temperatur gegebenenfalls auch als Eisenoxidhydroxid ausgefällt, indem man das in Lösung enthaltene Eisen(II) sowie Reste überschüssigen Reduktionsmittels mit Luftsauerstoff, gegebenenfalls unter Zuhilfenahme bekannter Oxidationskatalysatoren, oxidiert. Nach Abtrennen des ausgefallenen Eisen(III)hydroxids wird die verbleibende Lösung, die das Sulfat enthält, entweder verworfen oder aber, wie bevorzugt, aufbereitet. Insbesondere aus Ammoniumsulfat enthaltender Lösung wird durch Zusatz von gebranntem Kalk, Kalkmilch, gebranntem Dolomit oder Natronlauge oder Natriumcarbonat und Erhitzen das Ammoniak freigesetzt und ausgetrieben, um es wieder verwenden zu können. Calciumsulfat und/oder Natriumsulfat stellen verwertbare Nebenprodukte des Verfahrens dar.

Das abgetrennte Chromhydroxid wird nunmehr gänzlich oder zum Teil in Chromsäure gelöst, wozu die aus den Anodenabteilen der Elektrolysezelle stammende Chromsäure-Lösung zur Gänze oder zum Teil verwendet wird.

Mit dieser von unlöslichen Anteilen abgetrennten Lösung des Chromhydroxids in Chromsäure werden die Anodenabteile der Elektrolysezellen beschickt zwecks teilweise oder mahezu vollständiger Umwandlung des enthaltenen Chrom(III) in Chromsäure. Ist das abgetrennte Chromhydroxid gänzlich in Chromsäure aufgelöst worden, dann wird diese Lösung auch den Kathodenabteilen der Elektrolysezellen zugeführt. Zur Verbesserung der Stromausbeute bei der Abscheidung von metallischem Chrom kann dabei mit Vorteil eine chemische Reduktion des in der Lösung enthaltenen Chrom(VI) mittels Schwefeldioxid bei gleichzeitiger Schwefelsäure-Zugabe vorgeschaltet werden. Insgesamt vorteilhafter ist es jedoch, den zur Beschickung der Kathodenabteile vorgesehenen Anteil des Chromhydroxids sogleich in Schwefelsäure zu lösen, so daß eine Reduktion nicht mehr notwendig ist, und die von unlöslichen Anteilen abgetrennte Lösung den Kathodenräumen zuzuführen.

Die schwefelsaure Chrom(III)-sulfatlösung kann, um den Gehalt an Verunreinigungen weiter herabzusetzen, nach bekannten Methoden gereinigt werden, beispielsweise durch Extraktion der Verunreinigungen mit sauren Phosphorsäureestern oder sauren Phosphaten oder sauren Phosphonaten.

Ein Überlauf der Kathodenräume wird, gegebenenfalls nach Reduktion noch vorhandener, zu Oxidationen befähigter Anteile mit beispielsweise Schwefeldioxid, zurückgeführt in die durch Auflösen von Ferrochrom in Schwefelsäure entstandene Lösung, gewünschtenfalls auch teilweise in die durch Auflösen des Chromhydroxids in Säure entstandene Chrom(III)-Salz-Lösung in Chromsäure oder Schwefelsäure für die Beschickung der Kathodenräume.

Wird die Elektrolyse so betrieben, daß im Katholytkreislauf Chrom(II)-Ionen vorhanden sind, kann ein Teil des überlaufenden Katholyten als Reduktionsmittel bei der Fällung von Chrom(III)-hydroxid eingesetzt werden. Der verbleibende Teil wird nach Oxidation der Chrom(II)-Ionen beispielsweise mit Luftsauerstoff in die durch Auflösen von Ferrochrom entstandene Lösung zurückgeführt. Man kann den Chrom(II)-Ionen-haltigen Katholyten auch zur Reduktion von organischen Verbindungen einsetzen. Solche Reduktionen sind beispielsweise in "J.R. Hanson und E. Premuzic, Zeitschrift für Angewandte Chemie, 80. Jahrgang 1968, Nr. 7,S.271 bis 276" beschrieben.

Die in den Anodenräumen erzeugte Chromsäure-Lösung wird entnommen und teilweise oder gänzlich einer Verwertung als Chromsäure zugeführt, wobei diese Verwertung sowohl in Form der entnommenen Lösung wie auch in Form fester Chromsäure erfolgen kann. Zur Erzeugung der festen Chromsäure wird die Lösung im Regelfall eingedampft und die Chromsäure auskristallisieren gelassen. Vorzugsweise erfolgt die Kristallisation bei erhöhter Temperatur. Die nach der Kristallisation der Chromsäure verbleibende Mutterlauge, die noch gelöste Chromsäure enthält, kann wieder zur Auflösung von Chromhydroxid eingesetzt werden. Es ist selbstverständlich, daß maximal nur soviel Chromsäure dem Prozeß entnommen werden kann wie auch elektrolytisch erzeugt wird, für die Auflösung des Chromhydroxids muß stets ein nahezu konstanter Teil Chromsäure zur Verfügung stehen. Wird auch die für die Kathodenräume bestimmte Lösung durch Auflösung des Chromhydroxids in Chromsäure erzeugt, vermindert sich der insgesamt aus dem Prozeß abzugebende Anteil Chromsäure gegenüber der in den Anodenabteilen erzeugten Chromsäure-Menge um den durch Reduktion vernichteten Teil Chromsäure.

Um die Ansammlung von Verunreinigungen in den Anodenräume zu vermindern, kann ein Teil der erzeugten Chromsäure-Lösung oder ein Teil der nach Kristallisation der Chromsäure verbleibenden Mutterlauge ausgeschleust oder aber einer Reinigung unterworfen werden. Eine Reinigung kann z.B. in der Art erfolgen, daß das Chrom(VI) reduziert wird, z.B. mit Schwefeldioxid gegebenenfalls unter Zusatz von Schwefelsäure und die resultierende Lösung in die Ferrochrom-Auflösung oder in die nach Ferrochrom-Auflösung erhaltene Lösung zurückgeführt wird.

Besonders bevorzugt ist eine Verfahrensvariante, in der ein Teil der die Anodenräume verlassenden Chromsäure- und gegebenenfalls Schwefelsäure-haltigen Anolytlösung zum Lösen von Chromhydroxid verwendet wird, ein anderer Teil zu Chromsäurelösung und/oder Chromsäurekristallen aufgearbeitet wird und ein dritter Teil ausgeschleust und nach Reduktion mit Schwefeldioxid zum Lösen von Ferrochrom verwendet wird.

Bei hohen Reinheitsanforderungen wird der Anteil an auszuschleusender Anolytlösung so gewählt, daß der Gehalt an Fremdionen im Elektrolysekreislauf niedrig bleibt. Dieser Anteil auszuschleusender Anolytlösung kann bis zu 10 % der Gesamtmenge an erzeugter Anolytlösung betragen, wodurch die Menge an isolierbarer Chromsäure entsprechend zurückgeht.

Zur Trennung von Anoden- und Kathodenräumen der Zellen können Diaphragmen, Anionenaustauscher- und Kationenaustauschermembranen verwendet werden. Vorzugsweise werden Kationenaustauschermembranen eingesetzt, die ein Perfluorkohlenstoff-Polymergerüst mit Sulfonat-Austauschgruppen aufweisen. Solche Membranen sind beispielsweise unter der Bezeichnung ®Nafion, Firma DuPont, USA, im Handel. Geeignete Membranen sind beispielsweise ®Nafion 117, 324,417,423 und 430.

Als Elektrolysezellen werden vorzugsweise Rahmenzellen vom Typ Filterpresse eingesetzt. Wird auf der Kathodenseite Chrommetall erzeugt, sind diese Zellen vorzugsweise so konstruiert, daß die Kathodenplatten nach erfolgter Abscheidung von Chrommetall leicht aus der Zelle entfernt werden können. Als Konstruktionsmaterial für die Elektrolysezellen sind gegen Chromsäurelösung beständige Werkstoffe, insbesondere Titan, nachchloriertes PVC und PVDF geeignet.

Als Kathodenplatten können unterschiedliche Materialien wie Graphit, Blei, Kupfer, Nickel, Messing und deren Legierungen eingesetzt werden. Kathodenplatten aus Edelstahl sind bevorzugt.

Auf der Anodenseite werden vorzugsweise Elektroden mit einer elektrokatalytisch aktiven Schicht mit hoher Sauerstoffüberspannung eingesetzt. Dies können beispielsweise Elektroden aus Blei, Bleilegierungen oder verfestigtem Bleidioxid sein. Solche Anoden sind beispielsweise in der DE-A-2 619 426 beschrieben.

Besonders bevorzugt sind Elektroden aus einem Ventilmetall wie Titan, Niob oder Tantal, oder aus Graphit, die mit Bleidioxid beschichtet sind. Anoden dieser Art sind beispielsweise in der DE-A-2 714 605 und der US-A-4 236 978 beschrieben. Diese Anoden können zwischen Ventilmetall und Bleidioxid-Schicht eine leitfähige Zwischenschicht aufweisen. Diese Zwischenschicht kann aus einem oder mehreren Metalloxiden, wie beispielsweise Oxiden der Platinmetalle, Oxiden von Titan, Tantal, Vanadium und anderen Nichtedelmetallen oder auch aus naß- oder schmelzgalvanisch abgeschiedenen Edelmetallen, wie Platin und Iridium bestehen.

Als Bauformen der Anoden kommen beispielsweise Plattenelektroden, Streckmetallanoden, Messeranoden, Spaghetti-Anoden und Jalousie-Anoden in Betracht.

In einer vorteilhaften Variante des Verfahrens werden Festbettanoden eingesetzt. Diese Festbettanoden können beispielsweise aus einer Bleikugel-, Titankugel- oder Titanschwammpartikel- oder Graphitpartikel-Schüttung oder einem porösen Titansintermetall bestehen, auf deren Oberfläche Bleidioxid abgeschieden wurde. Die Kugeln bzw. die Partikel weisen einen Durchmesser von 1 bis 10 mm, vorzugsweise von 2 bis 5 mm auf. Durch diese Maßnahme wird im Anodenraum der Zellen eine nahezu vollständige Oxidation von Chrom(III) zu Chromsäure bei hoher anodischer Stromausbeute und hoher Raum-Zeit-Ausbeute erreicht.

Die Elektrolysezellen werden im Temperaturbereich zwischen 25 und 85°C, vorzugsweise zwischen 50 bis 80°C betrieben.

Die Elektrolysezellen sind mit Anolyt- und Katholytkreisläufen versehen, in denen die Elektrolyte rasch umgepumpt werden.

Diesen Kreisläufen wird frischer Elektrolyt, hergestellt durch Auflösen von Chromhydroxid in Schwefelsäure- und/oder Chromsäure-haltiger Lösung kontinuierlich zugegeben. Überlaufender chromsäurehaltiger Anolyt wird wie beschrieben in den Prozeß zurückgeführt oder zu Chromsäurelösung und/oder zu Chromsäurekristallen aufgearbeitet. Der Katholytüberlauf wird in den Prozeß, vorzugsweise vor der Chromhydroxidfällung, zurückgegeben.

Soll kathodisch Chrommetall erzeugt werden, wird zur Erzielung von hohen Chrommetallascheidungsraten und hohen Stromausbeuten im Katholytkreislauf eine Chromgesamtkonzentration von 20 bis 60 g/l und ein pH-Wert von 1 b is 2,8, vorzugsweise 2,1 bis 2,8, aufrechterhalten. Dies kann beispielsweise über die in den Katholytkreislauf gegebene Menge an frischem Elektrolyt und mit der darin enthaltenen Säuremenge, durch unabhängige Basen-oder Säuredosierung und durch Variation der kathodischen Stromdichte in vorgegebenen Grenzen geschehen. Im Anolytkreislauf kann die Chromgesamtkonzentration von 20 bis 700 g/l betragen.

Die Elektrolyse wird bei kathodischen Stromdichten von 0,3 bis kA/m², vorzugsweise bei 0,3 bis 1,7 kA/m² betrieben. Bei Einsatz von Festbettanoden liegen die anodischen Stromdichten bei 1 bis 15 A/m², vorzugsweise 4 bis 8 A/m² der Anodenoberfläche.

Durch Anwendung des erfindungsgemäßen Verfahrens gelingt die Darstellung von Chromsäure ohne Zwangsanfall von Chrom(VI)-haltigen Nebenprodukten.

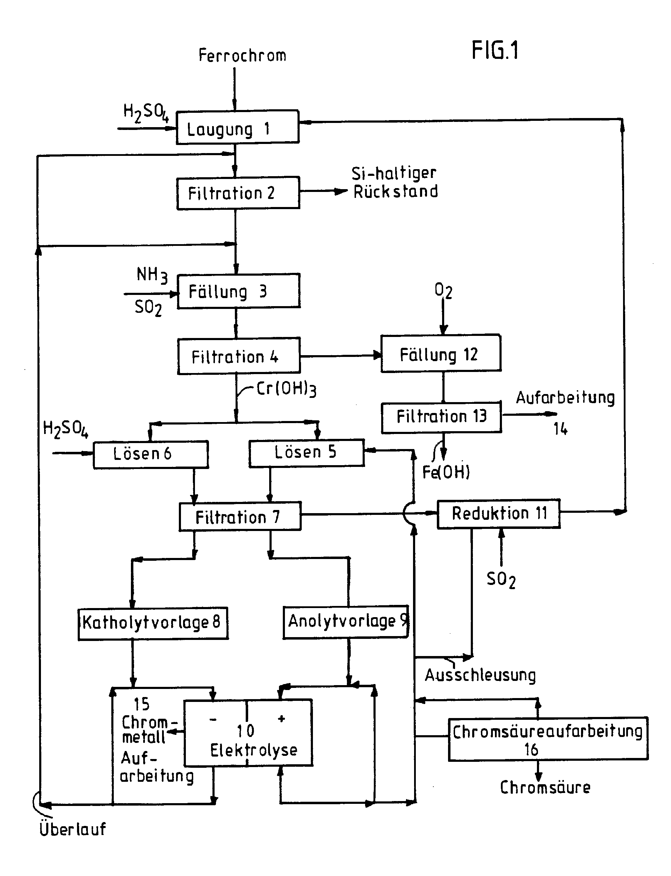

Das erfindungsgemäße Verfahren wird anhand Fig. 1 näher erläutert. Die in Fig. 1 beschriebene Verfahrensvariante stellt eine besonders vorteilhafte Ausführungsform dar.

Gemahlenes high carbon Ferrochrom wird mit konzentrierter Schwefelsäure und gegebenenfalls mit ausgeschleustem und reduziertem Anolyt-Überlauf (11) und Katholyt-Überlauf in der Siedehitze gelöst (1). Die entstandene Lösung wird auf ca. 80°C abgekühlt und durch Filtration von ungelöstem, siliciumhaltigen Rückstand befreit (2). Dieser Rückstand wird durch Waschen mit Wasser von lösbaren Bestandteilen befreit und geregelt entsorgt. Das Waschwasser wird in die Laugung (1) zurückgeführt oder mit der Lösung vereinigt.

Aus der nunmehr erhaltenen klaren Lösung wird gegebenenfalls nach Verdünnung der Lösung mit Wasser durch Zusatz von Natriumhydroxid oder vorzugsweise Ammoniakgas oder -lösung unter reduzierenden Bedingungen Chromhydroxid ausgefällt (3) und abgetrennt (4) und gewaschen. Zur Aufrechterhaltung der reduzierenden Bedingungen wird die Lösung vor und während der Fällung (3) mit Schwefeldioxid versetzt und die Fällung (3) und Filtration (4) unter Ausschluß von Sauerstoff betrieben. Dies geschieht durch Arbeiten in weitgehend abgeschlossenen Apparaturen und durch Überlagerung der zu handhabenden Lösungen mit Stickstoff. Die Fällung wird bei Temperaturen von 50 bis 90°C und bei pH-Werten von 4 bis 6 ausgeführt. Zur Ausfällung von Eisen(III)-hydroxid wird das Eisen(II)-sulfat-haltige Filtrat der Fällung (3) bei 60-90°C mit Luftsauerstoff versetzt, wobei Eisen(III) als Eisenoxidhydroxid ausfällt. Nach Abtrennen des ausgefallenen Eisenoxidhydroxids (13) wird die Lösung durch Versetzen mit Natriumhydroxid in bekannter Weise zu Natriumsulfat aufgearbeitet. Das beim Erhitzen freigesetzte Ammoniakgas wird bei der Fällung(3) eingesetzt.

Zur Bereitung der Lösung für die Anolytvorlage (9) wird anschließend abgetrenntes wasserhaltiges Chromhydroxid in chromsäurehaltiger Anolytlösung und/oder Mutterlauge aus der Chromsäure-Aufarbeitung (16) gelöst (5) und gegebenenfalls durch Filtration (7) von ungelösten Bestandteile befreit. Der Rückstand der Filtration (7) wird über die Reduktion (11) in die Laugung (1) zurückgeführt.

Zur Bereitung der Lösung für die Katholytvorlage (8) wird abgetrenntes, wasserhaltiges Chromhydroxid in Schwefelsäure gelöst (6) und gegebenenfalls durch Filtration (7) von ungelösten Bestandteilen befreit.

Nach Einstellen der für den Elektrolyseprozeß optimalen Konzentrationen durch Zugabe oder Verdampfen von Wasser und der pH-Werte durch Zugabe von Chromhydroxid und/oder Schwefelsäure und/oder chromsäurehaltiger Anolytlösung werden die Elektrolyte über die Anolytvorlage (9) und gegebenenfalls nach Reduktion mit Schwefeldioxid unter Zusatz von Schwefelsäure über die Katholytvorlage (8) de Anolyt-und Katholytkreisläufen der Zellen zugeführt.

Die Elektrolyse (10) wird nun so betrieben, daß sich im Katholytkreislauf eine Chromgesamtkonzentration von 10 bis 100 g/l und pH-Werte unter 1 einstellen. Dies geschieht über die Dosierung der Menge an Elektrolyt aus der Vorlage (8) und über die kathodische Stromdichte im Bereich von 0,05 bis 0,89 kA/m² oder durch Zugabe von Schwefelsäure. Die Elektrolysetemperatur von 50 bis 80°C, besonders bevorzugt ca 60°C wird über Wärmetauscher in dem Anolyt- und Katholytkreislauf geregelt. Der Überlauf des Katholytkreislaufes wird in den Prozeß in die Laugung (1) und vor die Fällung (3) zurückgeführt. Gegebenenfalls abgeschiedenes metallisches Chrom wird in die Laugung (1) oder in die Fällung (3) gegeben.

Bei gleichzeitiger Erzeugung von Chromsäure und Chrommetall wird die Elektrolyse so ausgeführt, daß sich im Katholytkreislauf pH-Werte von 2,1 bis 2,8 und Chromgesamtkonzentrationen von 20 bis 60 g/l einstellen. Diese pH-Werte werden durch Zugabe von Ammoniak oder einer anderen Base eingestellt. Die kathodische Stromdichte wird auf Werte zwischen 0,3 bis 1,7 kA/m² und die Elektrolysetemperatur auf einen Wert zwischen 50 bis 80°C, vorzugsweise 60°C eingestellt. Zur Erzielung von hohen kathodischen Stromausbeuten wird der Katholytkreislauf unter Ausschluß von Luftsauerstoff, beispielsweise durch Überlagerung mit Stickstoff, betrieben.

Nach einer Elektrolysezeit von ca 50 bis 100 Stunden werden die mit abgeschiedenem Chrommetall belegten Kathodenbleche aus den Zellen entfernt und von Chrommetall befreit. Das erhaltene Chrommetall wird dann nach bekannten Verfahren zum Verkaufsprodukt aufgearbeitet (15).

Der Überlauf des chromsäurehaltigen Anolytkreislaufes wird zum Lösen von Chromhydroxid (5) und zur Herstellung von Chromsäurelösung und Chromsäurekristallen eingesetzt (16). Um eine Anreicherung von Verunreinigungen in dem Anolytkreislauf zu vermeiden, wird ein Teil der Anolytlösung nach Reduktion mit Schwefeldioxid (11) in die Laugung (1) zurückgeführt.

Zur Herstellung von Chromsäurelösung wird die Anolytlösung, gegebenenfalls nach Oxidation von Chrom(III)-Resten mittels Peroxidsulfaten, durch Eindampfen oder Zugabe von Wasser auf ca. 50 % CrO₃ eingestellt.

Verkaufsfähige Chromsäurekristalle werden aus dieser Lösung durch Verdampfen von Wasser im Vakuum, Zentrifugieren und Waschen mit Wasser und Trocknen gewonnen. Die beim Zentrifugieren erhaltene Mutterlauge und die Waschlösung werden nach der Reduktion (11) zur Laugung (1) und/oder ohne vorherige Reduktion mit Schwefeldioxid zum Lösen von Chromhydroxid (5) eingesetzt.

### Beispiel 1

1090 g gemahlenes high carbon Ferrochrom werden mit 2580 g 96 %iger Schwefelsäure und 5 l Wasser bei 100°C gelöst. Die entstandene Lösung wird auf 80°C abgekühlt und durch Filtration von ungelöstem Rückstand befreit.

Die erhaltene klare Lösung wird mit 14,2 l Katholytüberlauf aus der Elektrolyse versetzt. Dabei entstehen 21 l einer Lösung mit 57 g/l Chrom(III) und 15 g/l Eisen(II). Aus dieser nunmehr erhaltenen Lösung wird durch Zugabe von 9,9 l einer 30 %ige Ammoniaklösung in Wasser bei 90°C und bei einem pH-Wert von 6 unter ständiger Zugabe von SO₂ Chromhydroxid ausgefällt und über ein Porzellanfilter abgetrennt.

Die dabei anfallenden 24 l eisenhaltiges Filtrat (15 g/l Fe²⁺) werden mit Luftsauerstoff versetzt, wobei Eisen(III) als Eisenoxidhydroxid ausfällt.

Das abgetrennte Chromhydroxid wird mit 7 l Wasser bei 80°C gewaschen, wobei durch Zugabe von SO₂ und wäßriger Ammoniaklösung reduzierende Bedingungen und ein pH-Wert von 6 eingestellt werden. Nach der Wäsche verbleiben 10,8 kg wasserhaltiges Chromhydroxid mit einem Gehalt von 66 Gew.-% H₂O.

Zur Bereitung der Lösung für die Katholytvorlage werden anschließend 7,15 kg wasserhaltiges Chromhydroxid in 2,85 kg 96 %iger Schwefelsäure gelöst und durch Feinfiltration von ungelösten Bestandteilen befreit.

Zur Bereitung der Lösung für die Anolytvorlage werden 3,65 kg wasserhaltiges Chromhydroxid in 10 l einer Chromsäurelösung mit 670 g/l CrO₃ gelöst und durch Feinfiltration von ungelösten Bestandteilen befreit.

Diese Lösungen werden einer Zweikammer-Elektrolysezelle zugeführt Die Elektrolysezelle besteht aus Elektrodenräumen aus Plexiglas® (Produkt Fa. Röhm). Als Membran wird eine Kationenaustauschermembran mit Sulfonsäureaustauschergruppen der Firma Du Pont mit der Bezeichnung Nafion® 324 verwendet. Die Kathode besteht aus einer Edelstahlplatte und weist eine Fläche von 250 cm² auf. Die Anode besteht aus zwei Bleidioxidplatten mit einer Gesamtfläche von 450 cm².

Die Elektrolyse wird bei 10A und 60°C betrieben. Unter diesen Bedingungen stellt sich eine Zellspannung von 6V ein. Während der Elektrolyse wird der pH-Wert des Katholyten durch Zugabe von Chromhydroxid bei einem Wert von 2,5 gehalten.

Nach einer Elektrolysezeit von 8 Stunden scheiden sich kathodisch 18,2 g Chrommetall ab. Anodisch werden während dieser Zeit 12,2 g CrO₃ durch Oxidation von Chrom(III) gebildet.

Reine Chromsäure wird anschließend aus der bei der Elektrolyse erhaltenen Anolytlösung durch Verdampfen von Wasser im Vakuum und Filtration gewonnen.

## Patentansprüche

1. Verfahren zur Erzeugung von Chromsäure, durch
a) Lösen von Kerrochrom in Schwefelsaure gegebenenfalls unter Zusatz von Katholyt- und-oder Anolyt-Überlauf aus der Elektrolyse
b) Entfernung von ungelösten Bestandteilen durch Filtration
c) Zugabe von Reduktionsmittel in einer Menge, die dem Gehalt an Eisen(III) und Chrom(IV) in der erhaltenen Lösung mehr als äquivalent ist
d) Fällung von Chrom(III)hydroxid unter Aufrechterhaltung der reduzierenden Bedingungen in der Lösung durch Anheben des pH-Wertes auf ca. 4-6 mittels Zugabe von Base
e) Abtrennung des ausgefällten Chromhydroxids unter Aufrechterhaltung der reduzierenden Bedingungen
f) Aufbereitung der das Eisen enthaltenden wäßrigen Lösung durch Oxidation; Ausfällung von Eisen(III) als Eisen(III)hydroxid oder Eisen(III)oxid-Verbindung
dadurch gekennzeichnet, daß
g) das in Stufe e) abgetrennte Chromhydroxid in Chromsaure und gegebenenfalls Schwefelsaure aufgelöst wird, dergestalt, daß entweder eine einheitliche Lösung in Chromsaure oder aber zwei Lösungen, davon eine in Chromsäure und eine weitere in Schwefelsaure erzeugt wird
h) aus der Lösung ungelöste Anteile abgetrennt werden,
i) die Lösung von Chromhydroxid in Chromsaure als Anolyt zur elektrolytischen Erzeugung von Chromsaure in mit Membranen geteilten Elektrolysezellen eingesetzt wird
und entweder dieselbe Lösung
oder die Lösung von Chromhydroxid in Schwefelsaure als Katholyt in den genannten, mit Membranen geteilten Elektrolysezellen eingesetzt wird, wobei an der Kathode Wasserstoff und/oder Chrommetall elektrolytisch abgeschieden und/oder Chrom(II)-Ionen elektrolytisch erzeugt werden.

2. Verfahren gemäß Anspruch 1, dadurch gekennzeichnet, daß als Reduktionsmittel Schwefeldioxid, schweflige Saure sowie deren Salze, metallisches Eisen, metallisches Chrom, Chrom(II)-Salze, Hydrazin, Hydroxylamin und/oder Wasserstoff eingesetzt wird.

3. Verfahren gemäß Anspruch 1 oder 2, dadurch gekennzeichnet, daß als Base Ammoniak, Natriumhydroxid, Natriumcarbonat und/oder ihre wäßrige Lösung eingesetzt wird.

4. Verfahren gemäß einem oder mehreren der Ansprüche 1 bis 3, dadurch gekennzeichnet, daß ein Teil der die Zellen verlassenden Chromsäure-haltigen und gegebenenfalls Schwefelsäure-haltigen Anolytlösung zum Lösen von Chromhydroxid verwendet wird, ein anderer Teil zu Chromsäurelösung und/oder Chromsaurekristallisation aufgearbeitet wird und ein dritter Teil nach Reduktion mit Schwefeldioxid zum Lösen von Ferrochrom verwendet wird.

## Claims

1. Process for the production of chromic acid by
a.) dissolving of ferrochrome in sulphuric acid, optionally with the addition of catholyte and/or anolyte overflow from the electrolysis,
b.) removal of undissolved constituents by filtration,
c.) addition of reducing agents in a quantity more than equivalent to the quantity of iron(III) and chromium(IV) in the solution,
d.) precipitation of chromium(III) hydroxide by raising of the pH to about 4-6 by the addition of a base while the reducing conditions in the solution are maintained,
e.) separation of the precipitated chromium hydroxide while the reducing conditions are maintained,
f.) working up of the aqueous solution containing the iron by oxidation; precipitation of iron(III) as iron (III)hydroxide or iron(III) oxide compound
characterised in that
g.) the chromium hydroxide separated in stage e) is dissolved in chromic acid and optionally sulphuric acid in such a manner that either a uniform solution in chromic acid is produced or two solutions are produced, one in chromic acid and another in sulphuric acid,
h.) undissolved constituents are separated from the solution and
i.) the solution of chromium hydroxide in chromic acid is used as anolyte for the electrolytic production of chromic acid in electrolytic cells divided by membranes and either the same solution or the solution of chromium hydroxide in sulphuric acid is used as catholyte in the above mentioned electrolytic cells divided by membranes, hydrogen and/or metallic chromium being deposited electrolytically at the cathode and/or chromium(II) ions being produced electrolytically.

2. Process according to Claim 1, characterised in that the reducing agent used is sulphur dioxide, sulphurous acid and salts thereof, metallic iron, metallic chromium, chromium(II) salts, hydrazine, hydroxylamine and/or hydrogen.

3. Process according to Claim 1 or Claim 2, characterised in that the base used is ammonia, sodium hydroxide, sodium carbonate and/or an aqueous solution thereof.

4. Process according to one or more of claims 1 to 3, characterised in that part of the anolyte solution leaving the cells and containing chromic acid and optionally sulphuric acid is used for dissolving chromium hydroxide, another part is worked up into chromic acid solution and/or chromic acid crystals and a third part is used for dissolving ferrochrome after reduction with sulphur dioxide.

## Revendications

1. Procédé pour la production de l'acide chromique dans lequel
a) on dissout du ferrochrome dans de l'acide sulfurique, éventuellement avec adjonction de catholyte et/ou d'anolyte recyclé après sortie de l'électrolyse,
b) on élimine les constituants non dissous par filtration,
c) on ajoute un agent réducteur en quantité supérieure à la quantité correspondant à la teneur en fer-III et chrome-IV de la solution,
d) on précipite l'hydroxyde de chrome-III en maintenant des conditions réductrices dans la solution par montée du pH à un niveau d'environ 4 à 6 par addition d'une base,
e) on sépare l'hydroxyde de chrome qui a précipité en maintenant les conditions réductrices,
f) on traite la solution aqueuse contenant le fer par oxydation ; on précipite le fer-III à l'état d'hydroxyde de fer-III ou de dérivés de cet oxyde, ce procédé se caractérisant en ce que:
g) l'hydroxyde de chrome séparé au stade e) est dissous dans de l'acide chromique et le cas échéant de l'acide sulfurique avec formation soit d'une solution unique dans l'acide chromique, soit de deux solutions dont l'une dans l'acide chromique et l'autre dans l'acide sulfurique,
h) on sépare les fractions non dissoutes de la solution,
i) on utilise la solution d'hydroxyde de chrome dans l'acide chromique en tant qu'anolyte pour la production d'acide chromique par électrolyse dans des cellules compartimentées par des membranes,
et on utilise soit la même solution, soit la solution d'hydroxyde de chrome dans l'acide sulfurique en tant que catholyte dans les cellules d'électrolyse en question compartimentées par des membranes, avec production à la cathode d'hydrogène et/ou de chrome métallique déposé par électrolyse et/ou d'ions chrome-II produits par l'électrolyse.

2. Procédé selon revendication 1, caractérisé en ce que l'on utilise en tant qu'agent réducteur du dioxyde de soufre, de l'acide sulfureux ou ses sels, le fer métallique, le chrome métallique, des sels de chrome-II, l'hydrazine, l'hydroxylamine et/ou l'hydrogène.

3. Procédé selon revendication 1 ou 2, caractérisé en ce que l'on utilise en tant que base l'ammoniac, l'hydroxyde de sodium, le carbonate de sodium et/ou leurs solutions aqueuses.

4. Procédé selon une ou plusieurs des revendications qui précèdent, caractérisé en ce que l'on utilise une partie de la solution d'anolyte sortant des cellules, contenant de l'acide chromique et le cas échéant de l'acide sulfurique, pour la dissolution de l'hydroxyde de chrome, on en convertit une autre partie en solution d'acide chromique et/ou cristaux d'acide chromique et on en utilise une troisième partie, après réduction par du dioxyde de soufre, pour la dissolution du ferrochrome.
